(19) Europäisches Patentamt
European Patent Office
Office européen des brevets

(11) **EP 3 712 621 B1**

(12) **FASCICULE DE BREVET EUROPEEN**

(45) Date de publication et mention de la délivrance du brevet:
**07.06.2023 Bulletin 2023/23**

(21) Numéro de dépôt: **20158646.8**

(22) Date de dépôt: **21.02.2020**

(51) Classification Internationale des Brevets (IPC):
**G01P 5/26** *(2006.01)* **G01S 17/58** *(2006.01)*
**F03D 7/04** *(2006.01)* **F03D 17/00** *(2016.01)*

(52) Classification Coopérative des Brevets (CPC):
**G01P 5/26; F03D 7/043; F03D 17/00; G01S 17/58;**
F05B 2260/821; F05B 2270/32; F05B 2270/8042;
Y02A 30/00; Y02E 10/72

(54) **PROCEDE DE PREDICTION DE LA VITESSE DU VENT DANS LE PLAN DU ROTOR POUR UNE EOLIENNE EQUIPEE D'UN CAPTEUR DE TELEDETECTION PAR LASER**

VERFAHREN ZUR VORHERSAGE DER WINDGESCHWINDIGKEIT IN HÖHE DES ROTORS EINER WINDKRAFTANLAGE, DIE MIT EINEM LASER-FERNERKENNUNGSSENSOR AUSGESTATTET IST

METHOD FOR PREDICTING THE WIND SPEED IN THE ROTOR PLANE OF A WIND TURBINE PROVIDED WITH A SENSOR FOR REMOTE LASER DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2019 FR 1902739**

(43) Date de publication de la demande:
**23.09.2020 Bulletin 2020/39**

(73) Titulaire: **IFP Energies nouvelles**
**92852 Rueil-Malmaison Cedex (FR)**

(72) Inventeurs:
• **GUILLEMIN, Fabrice**
**92852 RUEIL-MALMAISON CEDEX (FR)**
• **NGUYEN, Hoai-Nam**
**92852 RUEIL-MALMAISON CEDEX (FR)**

(56) Documents cités:
**EP-A1- 3 273 055      US-A1- 2014 167 415**
**US-A1- 2015 145 253**

• **ERIC SIMLEY ET AL: "Characterization of wind velocities in the upstream induction zone of a wind turbine using scanning continuous-wave lidars", JOURNAL OF RENEWABLE AND SUSTAINABLE ENERGY, vol. 8, no. 1, 1 janvier 2016 (2016-01-01) , page 013301, XP055611027, DOI: 10.1063/1.4940025**

## Description

### Domaine technique

La présente invention concerne le domaine des énergies renouvelables et concerne plus particulièrement la mesure de la ressource des éoliennes, le vent, dans des objectifs de prédiction du vent, de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximalisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

### Technique antérieure

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LIDAR (acronyme de l'expression en langue anglaise « light détection and ranging » pouvant être traduite par télédétection par Laser). Le LIDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LIDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LIDAR est annoncé comme étant un capteur indispensable au bon fonctionnement des grandes éoliennes, tout particulièrement alors que leur taille et leur puissance augmente (aujourd'hui, 5 MW, bientôt 12 MW en offshore). Ce capteur permet la mesure à distance du vent, permettant dans un premier temps de calibrer les éoliennes pour qu'elle puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaître la ressource productrice d'énergie. Ceci est important pour les projets éoliens, puisque cela conditionne la fiabilité financière du projet.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaître à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LIDAR en estimant précisément la vitesse du vent au niveau du rotor, c'est-à-dire dans le plan du rotor. Une telle application est décrite notamment dans la demande de brevet FR 3013777 (US 2015145253).

De plus, les contrôleurs avancés d'éoliennes peuvent être complétés par une commande « feedforward » (pouvant être traduit par action anticipatrice), reposant sur des mesures prédictionnelles du vent fournies par les capteurs LIDAR, afin de réguler la vitesse du rotor et de réduire les charges structurelles sur l'éolienne. L'efficacité de la commande feedforward dépend largement de la précision avec laquelle la prédiction du vent peut être mesurée ou estimée.

Le potentiel d'utilisation des capteurs LIDAR pour estimer la vitesse du vent dans le plan du rotor a été étudié. En général, pour extrapoler la vitesse du vent depuis la distance de mesure la plus proche du capteur LIDAR, par exemple 50 m, jusqu'au plan du rotor, on applique l'hypothèse de turbulence gelée de Taylor (TFH). Le principal avantage de l'utilisation de TFH est sa simplicité. Cependant, la TFH pourrait ne pas être suffisamment précise dans la pratique. Lors de l'utilisation de TFH pour l'estimation de la vitesse du vent, aucune considération n'a été prise pour l'évolution du vent, qui est affecté par les conditions du site, les effets d'obstruction de l'éolienne et la nature physique toujours changeante du vent. Il en résulte un décalage important entre la vitesse estimée du vent dans le plan du rotor et la vitesse réelle du vent qui frappe le rotor (cf. les documents Eric Simley, Lucy Y Pao, Pieter Gebraad, and Matthew Churchfield. "Investigation of the impact of the upstream induction zone on lidar measurement accuracy for wind turbine control applications using large-eddy simulation". In: Journal of Physics: Conférence Séries. Vol. 524. 1. IOP Publishing. 2014, p. 012003 et Eric Simley, Lucy Pao, Neil Kelley, Bonnie Jonkman, and Rod Frehlich. "Lidar wind speed measurements of evolving wind fields". In: 50th AIAA Aerospace Sciences Meeting including the New Horizons Forum and Aerospace Exposition. 2012, p. 656).

Pour pallier les inconvénients de l'utilisation du TFH pour l'estimation de la vitesse du vent, une approche est considérée dans le document Ashim Giyanani, WAAM Bierbooms, and GJW van Bussel. "Estimation of rotor effective wind speeds using autoregressive models on Lidar data". In: Journal of Physics: Conférence Séries. Vol. 753. 7. IOP Publishing. 2016, p. 072018. L'idée principale consiste à modéliser l'écoulement du champ de vent comme un modèle exogène à moyenne mobile autorégressive. Ce modèle est entraîné sur les mesures passées, ce qui permet de prédire les vitesses de vent futures dans le plan du rotor. Cependant, il n'est pas clair comment les paramètres du modèle sont déterminés. De plus, le modèle est statique, dans le sens où une fois identifié, il ne change pas, quelles que soient les conditions de vent. Concrètement, cette méthode peut difficilement être mise en oeuvre dans la pratique.

Le document EP 3273055 A1 décrit un système et une méthode pour contrôler une éolienne équipée d'un capteur LIDAR, le système et la méthode étant aptes à prendre en compte les effets d'induction.

Le document US 2014/167415 A1 concerne une méthode et un système de contrôle d'une éolienne, le système et la méthode étant aptes à prendre en compte un retard temporel.

**Résumé de l'invention**

Afin de prédire le vent de manière précise (sans l'hypothèse de turbulence gelée de Taylor), la présente invention concerne un procédé de prédiction de la vitesse du vent dans le plan du rotor, en prenant en compte un facteur d'induction, qui est utilisé dans un modèle d'évolution du vent mis en oeuvre au moyen d'un filtre de Kalman. Le facteur d'induction et le modèle d'évolution du vent permettent de prendre en compte les effets sur le vent liés à l'obstruction de l'éolienne dans la prédiction. Ainsi, la prédiction du vent au niveau du rotor est précise.

L'invention concerne également un procédé de contrôle d'une éolienne, un produit programme d'ordinateur, un capteur LIDAR, et une éolienne, ces objets utilisant la prédiction du vent déterminée par le procédé selon l'invention.

La présente invention concerne un procédé de prédiction de la vitesse du vent dans le plan du rotor d'une éolienne équipée d'un capteur LIDAR, dans lequel on met en oeuvre les étapes suivantes :

a) On mesure la vitesse du vent en au moins un plan de mesure distant de ladite éolienne au moyen dudit capteur LIDAR ;

b) On détermine un facteur d'induction du vent, ledit facteur d'induction du vent représentant un coefficient de freinage du vent entre ledit plan de mesure et ledit plan dudit rotor ;

c) On détermine un indice de retard entre ledit plan de mesure et ledit plan du rotor de ladite éolienne au moyen dudit facteur d'induction et de ladite mesure de vitesse du vent dans ledit plan de mesure ;

d) On construit un modèle d'évolution du vent entre ledit plan de mesure et ledit plan dudit rotor, ledit modèle d'évolution du vent reliant la vitesse du vent dans ledit plan dudit rotor à un instant prédéterminé, à la vitesse mesurée du vent dans ledit plan de mesure à plusieurs instants antérieurs audit instant prédéterminé, au moyen dudit facteur d'induction, lesdits instants antérieurs étant déterminés au moyen dudit indice de retard ;

e) On détermine ladite prédiction de la vitesse du vent dans ledit plan du rotor au moyen dudit modèle d'évolution du vent et d'un filtre de Kalman, de préférence un filtre de Kalman adaptatif.

Selon un mode de réalisation de l'invention, on détermine un facteur d'induction du vent, en mettant en oeuvre les étapes suivantes :

i) on mesure la vitesse du vent en au moins trois plans de mesure distants de ladite éolienne au moyen dudit capteur LIDAR ;

ii) on détermine au moins deux facteurs d'induction du vent entre deux desdits plans de mesure au moyen desdites mesures de la vitesse du vent auxdits plans de mesure et d'un filtre de Kalman linéaire ; et

iii) on détermine ledit facteur d'induction du vent entre un plan de mesure et ledit plan du rotor de ladite éolienne au moyen desdits facteurs d'induction entre deux plans de mesure déterminés et au moyen d'un filtre de Kalman linéaire.

Conformément à une mise en oeuvre, ladite étape de mesure de la vitesse du vent comprend une sous-étape de reconstruction du champ de vent dans ledit plan de mesure, ce champ de vent reconstruit étant utilisé dans les autres étapes du procédé en tant que mesure de la vitesse du vent dans ledit plan de mesure.

Selon un aspect, on détermine l'indice de retard $k_{d0}$ par une équation :

$$k_{d0} = \frac{2x_1}{(U_{x1} + U_0)T_s}$$

avec

$$U_0 = a_{0,x_1} U_{x_1}$$

avec $x_1$ la distance entre ledit plan de mesure et ledit plan de rotor, $T_s$ la période d'échantillonnage de la mesure, $U_{x1}$ la vitesse moyenne du vent mesurée dans ledit plan de mesure, $U_0$ la vitesse moyenne du vent dans ledit plan de rotor, et $a_{0,x1}$ ledit facteur d'induction entre ledit plan de mesure et ledit plan de rotor.

Selon une caractéistique, ledit modèle d'évolution du vent s'écrit :

$$u_0(k + p) = \tilde{U}_{x_1}(k - k_{d0} + p)^T \mathbf{r}(k|k)$$

avec

$$\tilde{U}_{x_1}(k - k_{d0} + p) = [\tilde{u}_{x_1}(k - k_{d0} + p) \ \tilde{u}_{x_1}(k - k_{d0} + p - 1) \ \tilde{u}_{x_1}(k - k_{d0} + p + 1) \ \ldots \\ \ldots \ \tilde{u}_{x_1}(k - k_{d0} + p + N_d)]^T$$

et

$$\tilde{u}_{x_1}(k) = a_{0,x_1} u_{x_1}(k)$$

avec $u_0$ le vent dans le plan du rotor k le temps discrétisé, p le pas de temps futur, $k_{d0}$ l'indice de retard, r le vecteur d'état déterminé par le filtre de Kalman, x1 le plan de mesure, $N_d$ l'ordre dudit modèle d'évolution du vent, $u_{x1}$ la vitesse du vent mesurée dans ledit plan de mesure, et $a_{0,x1}$ ledit facteur d'induction entre ledit plan de mesure et ledit plan de rotor.

Avantageusement, l'ordre du modèle d'évolution du vent $N_d$ vaut 2.

De plus, l'invention concerne un procédé de contrôle d'une éolienne équipée d'un capteur LIDAR, dans lequel on met en oeuvre les étapes suivantes :

a) on détermine ladite prédiction de la vitesse du vent dans le plan du rotor de ladite éolienne au moyen du procédé selon l'une des caractéristiques précédentes ;

b) on contrôle ladite éolienne en fonction de ladite vitesse du vent au niveau du plan du rotor.

L'invention concerne également un produit programme d'ordinateur comprenant des instructions de code agencés pour mettre en oeuvre les étapes d'un procédé selon l'une des caractéristiques précédentes, lorsque le programme est exécuté sur une unité de traitement dudit capteur LIDAR.

L'invention concerne aussi un capteur LIDAR adapté pour mesurer la vitesse du vent en au moins un plan de mesure (PM) distant d'une éolienne comprenant une unité de traitement mettant en oeuvre les étapes b) à e) d'un procédé selon l'une des caractéristiques précédentes.

En outre, l'invention concerne une éolienne comportant un capteur LIDAR selon l'une des caractéristiques précédentes, ledit capteur LIDAR étant de préférence placé sur la nacelle de ladite éolienne ou dans le nez de l'éolienne.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre une éolienne équipée d'un capteur LIDAR selon un mode de réalisation de l'invention.

La figure 2 illustre les étapes du procédé de prédiction de la vitesse du vent dans le plan du rotor selon un mode de réalisation de l'invention.

La figure 3 illustre les étapes du procédé de prédiction de la vitesse du vent dans le plan du rotor selon un deuxième mode de réalisation de l'invention.

La figure 4 illustre une courbe comparative par rapport à un vent de référence pour un exemple d'une prédiction à 0s du vent dans le plan du rotor pour un procédé selon l'art antérieur, et pour le procédé de prédiction selon un mode de réalisation de l'invention.

La figure 5 illustre une courbe comparative par rapport à un vent de référence pour un exemple de la prédiction à 1s du vent dans le plan du rotor pour un procédé selon un mode de réalisation de l'invention.

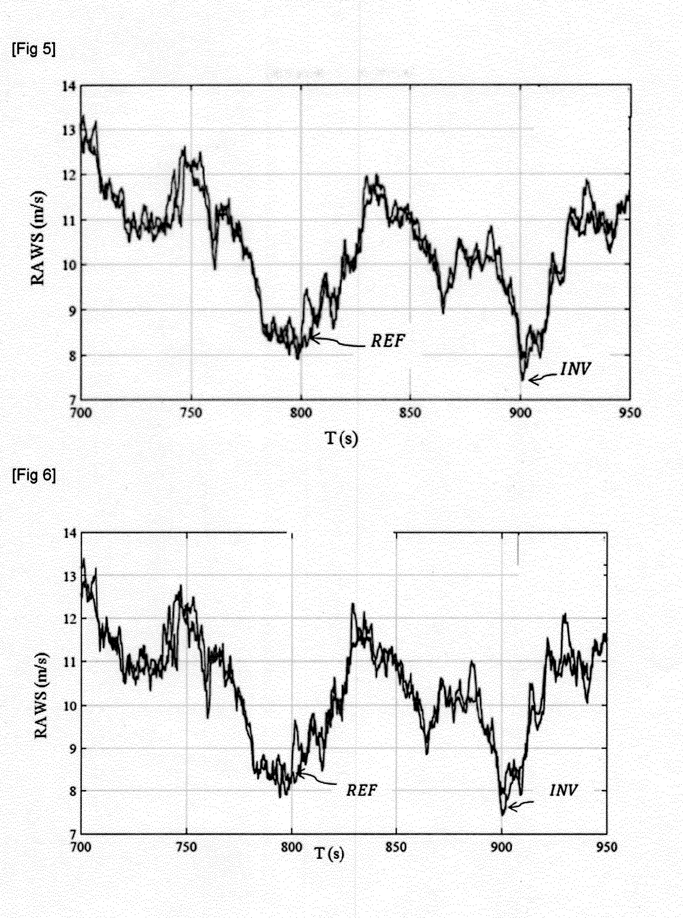

La figure 5 illustre une courbe comparative par rapport à un vent de référence pour un exemple de la prédiction à 2s du vent dans le plan du rotor pour un procédé selon un mode de réalisation de l'invention.

**Description des modes de réalisation**

La présente invention concerne un procédé de prédiction de la vitesse du vent dans le plan du rotor d'une éolienne équipée d'un capteur LIDAR. Le procédé permet la prédiction de la vitesse du vent, car il permet de déterminer pour au moins un instant futur la vitesse du vent dans le plan du rotor de l'éolienne.

Selon l'invention, le capteur LIDAR permet de mesurer la vitesse du vent sur au moins un plan de mesure en amont de l'éolienne. Il existe plusieurs types de capteur LIDAR, par exemple les capteurs LIDAR scannés, LIDAR continus ou LIDAR pulsés. Dans le cadre de l'invention, on utilise de préférence un LIDAR pulsé. Cependant, les autres technologies de LIDAR peuvent être utilisées tout en restant dans le cadre de l'invention.

Le capteur LIDAR permet une mesure rapide. Par conséquent, l'utilisation d'un tel capteur, permet une détermination rapide en continu de la prédiction de la vitesse du vent. Par exemple, le taux d'échantillonnage du capteur LIDAR peut être compris entre 1 et 5Hz (voire plus dans le futur), et peut valoir 4 Hz. De plus, le capteur LIDAR permet d'obtenir des informations relatives au vent en amont de l'éolienne, ces informations sont liées au vent qui va arriver sur l'éolienne. Par conséquent, le capteur LIDAR peut être utilisé pour la prédiction de la vitesse du vent dans le plan du rotor de l'éolienne.

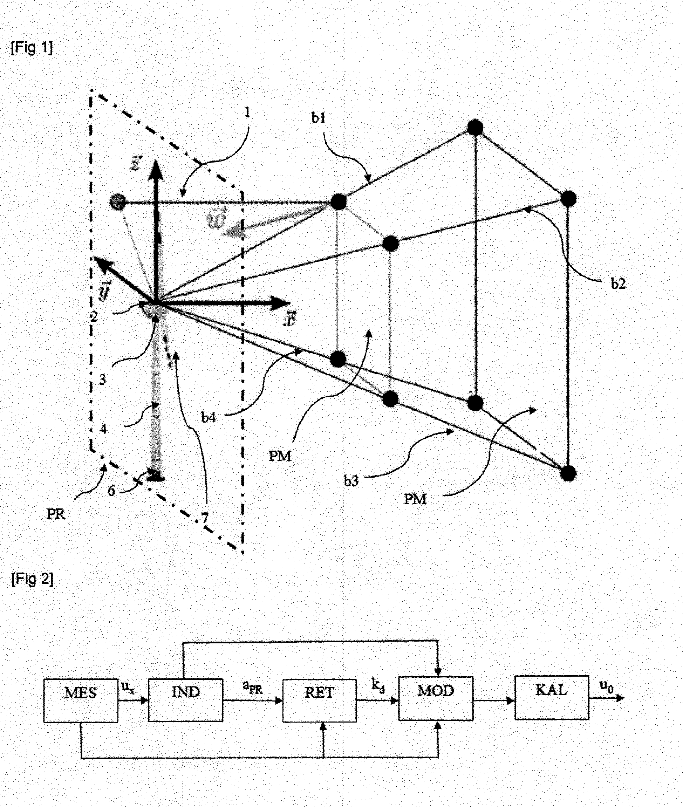

La figure 1 représente, de manière schématique et non limitative, une éolienne 1 à axe horizontal équipée d'un capteur LIDAR 2 pour le procédé selon un mode de réalisation de l'invention. Le capteur LIDAR 2 est utilisé pour mesurer la vitesse du vent à une distance donnée sur une pluralité de plans de mesure PM (seulement deux plans de mesure sont représentés). La connaissance en avance de la mesure de vent permet a priori de donner beaucoup d'informations. Sur cette figure, sont représentés également les axes x, y et z. Le point de référence de ce repère est le centre du rotor. La direction x est la direction longitudinale, correspondant à la direction de l'axe du rotor, en amont de l'éolienne, cette direction correspond aussi à la direction de mesure du capteur LIDAR 2. La direction y, perpendiculaire à la direction x, est la direction latérale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. La plan du rotor est indiqué par le rectangle en traits pointillés PR, il est défini par les directions y, z pour une valeur de x nul. Les plans de mesure PM sont des plans formés par les directions y, z à une distance du plan du rotor PR (pour une valeur de x non nulle). Les plans de mesure PM sont parallèles au plan du rotor PR.

Classiquement, une éolienne 1 permet de transformer l'énergie cinétique du vent en énergie électrique ou mécanique. Pour la conversion du vent en énergie électrique, elle se compose des éléments suivants :

un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;

une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine dans la bonne direction ;

le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) (non représentés) qui convertit l'énergie recueillie en énergie électrique. Le rotor est potentiellement doté de systèmes de contrôle tels que des pales à angle variable ou des freins aérodynamiques ;

une transmission, composée de deux axes (arbre mécanique du rotor et arbre mécanique de la machine électrique) reliés par une transmission (boite de vitesse) (non représentés).

Comme visible à la figure 1, qui est un exemple de réalisation d'un capteur LIDAR pulsé, le capteur LIDAR 2 utilisé comporte quatre faisceaux ou axes de mesures (b1, b2, b3, b4). De manière non limitative, le procédé selon l'invention fonctionne également avec un capteur LIDAR comportant un nombre quelconque de faisceaux. Le capteur LIDAR réalise une mesure ponctuelle en chaque point d'intersection d'un plan de mesure PM et d'un faisceau (b1, b2, b3, b4). Ces points de mesure sont représentés par des cercles noirs sur la figure 1. Le traitement des mesures en ces points de mesure permet de déterminer la vitesse du vent dans les plans de mesure PM. Pour cela, on peut appliquer notamment le procédé de modélisation du vent décrit dans la demande de brevet français FR 3068139 (WO2018/234409).

De préférence, le capteur LIDAR 2 peut être monté sur la nacelle 3 de l'éolienne 1.

Selon l'invention, le procédé de prédiction du vent comporte les étapes suivantes :

1) Mesure du vent
2) Détermination d'un facteur d'induction
3) Détermination d'un indice de retard
4) Construction d'un modèle d'évolution du vent
5) Détermination de la prédiction de la vitesse du vent

Ces étapes sont réalisées en temps réel.

La figure 2 illustre, schématiquement et de manière non limitative, les étapes du procédé de prédiction selon un mode de réalisation l'invention. La première étape est une étape de mesure (MES) de la vitesse du vent $u_x$ en au moins un plan de mesure au moyen du capteur LIDAR. La deuxième étape (IND) utilise les mesures $u_x$ pour déterminer un facteur d'induction $a_{PR}$ entre le plan de mesure et le plan du rotor. La troisième étape (RET) utilise le facteur d'induction $a_{PR}$ et les mesures $u_x$ pour déterminer un indice de retard $k_d$. La quatrième étape est une étape de construction d'un modèle d'évolution du vent (MOD) à partir des mesures $u_x$, du facteur d'induction $a_{PR}$, et de l'indice de retard $k_d$. Ensuite, on applique un filtre de Kalman (KAL), notamment un filtre de Kalman adaptatif, au modèle d'évolution du vent (MOD) pour obtenir une prédiction de la vitesse du vent dans le plan du rotor $u_0$.

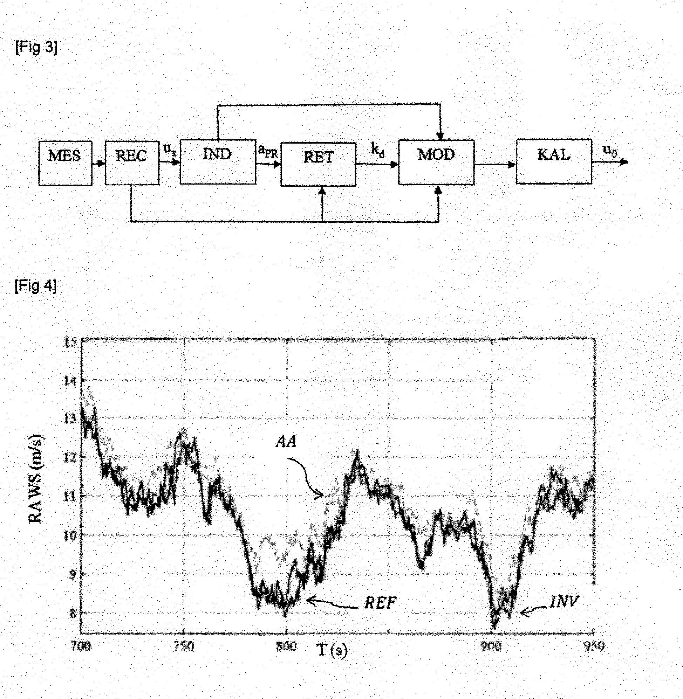

La figure 3 illustre, schématiquement et de manière non limitative, les étapes du procédé de prédiction selon un deuxième mode de réalisation de l'invention. La première étape est une étape de mesure (MES) de la vitesse du vent en au moins un plan de mesure au moyen du capteur LIDAR. Par rapport au mode de réalisation de la figure 1, on ajoute une étape de reconstruction (REC) du vent à partir des mesures avant de déterminer la vitesse du vent $u_x$ dans le plan de mesure. La troisième étape (IND) utilise les mesures reconstruites $u_x$ pour déterminer un facteur d'induction $a_{PR}$ entre le plan de mesure et le plan du rotor. La quatrième étape (RET) utilise le facteur d'induction $a_{PR}$ et les mesures reconstruites $u_x$ pour déterminer un indice de retard $k_d$. La cinquième étape est une étape de construction d'un modèle d'évolution du vent (MOD) à partir des mesures reconstruites $u_x$, du facteur d'induction $a_{PR}$, et de l'indice de retard $k_d$. Ensuite, on applique un filtre de Kalman (KAL), notamment un filtre de Kalman adaptatif, au modèle d'évolution du vent, pour obtenir une prédiction de la vitesse du vent dans le plan du rotor $u_0$.

1) Mesure de la vitesse du vent

Lors de cette étape, on mesure, en continu, la vitesse du vent en au moins un plan de mesure distant de l'éolienne au moyen du capteur LIDAR. Ainsi, la vitesse de vent peut être connue en amont de l'éolienne en au moins un plan de mesure. Pour cette étape, on considère les trois composantes du vent (longitudinale, latérale et verticale), ainsi que les variations de la vitesse du vent dans le plan de mesure (par exemple la vitesse du vent augmente avec l'altitude).
Selon un mode de réalisation de l'invention, on peut réaliser la mesure de la vitesse du vent en au moins trois plans de mesure, pour faciliter la détermination du facteur d'induction (cf. étape 2)). De préférence, on peut réaliser la mesure de la vitesse du vent en quatre plans de mesure, de manière à augmenter la précision de la connaissance du vent en amont de l'éolienne et par conséquent la précision de l'estimation du facteur d'induction du vent au niveau du plan du rotor.
Conformément à une mise en oeuvre de réalisation de l'invention, les plans de mesure peuvent être éloignés d'une distance longitudinale (selon l'axe x de la figure 1) comprise préférentiellement entre 50 et 400 m du plan du rotor. Ainsi, il est possible de déterminer l'évolution de la vitesse du vent sur une longue distance en amont de l'éolienne, ce qui permet également d'augmenter la précision de l'estimation de la prédiction de la vitesse du vent dans le plan du rotor.
Alternativement, les plans de mesure peuvent être plus proches ou plus éloignés que l'intervalle préféré.
Selon un exemple de réalisation non limitatif, le capteur LIDAR peut réaliser des mesures pour dix plans de mesure, notamment ils peuvent être situés respectivement à des distances de 50, 70, 90, 100, 110, 120, 140, 160, 180 et 200 m du plan du rotor.
Conformément à une mise en oeuvre de l'invention correspondant au mode de réalisation de la figure 3, l'étape de mesure du vent peut comporter une étape de reconstruction du vent, afin d'interpréter les mesures brutes du capteur LIDAR. Différentes méthodes de reconstruction du vent peuvent être mises en oeuvre. Par exemple non limitatif, on peut mettre en oeuvre le procédé de reconstruction du vent décrit dans la demande de brevet FR 3068139 (WO2018/234409), dont on rappelle les principales étapes :

- Maillage de l'espace situé en amont dudit capteur LIDAR, le maillage comprend des points d'estimation et des points de mesure ;
- Mesure de l'amplitude et de la direction du vent aux différents points de mesure ;
- Estimation de l'amplitude et de la direction du vent à un instant quelconque pour l'ensemble des points d'estimation par une méthode des moindres carrés récursifs d'une fonction de coût ; et
- Reconstruction du champ de vent incident en trois dimensions et en temps réel sur l'ensemble des points discrétisés.

2) Détermination d'un facteur d'induction

Lors de cette étape, on détermine un facteur d'induction du vent entre un plan de mesure et le plan du rotor. Le facteur d'induction est un coefficient de freinage du vent dans la zone d'induction de l'éolienne (c'est-à-dire en amont de l'éolienne). En effet, le vent est freiné dans la zone amont de l'éolienne par la présence de l'éolienne et son fonctionnement : en d'autres termes, la puissance prélevée par l'éolienne au vent, entraîne un freinage du vent en amont de l'éolienne. Ainsi, le facteur d'induction est représentatif d'un phénomène physique, et donne une indication relative à la ressource de l'éolienne. Le facteur d'induction se calcule entre deux plans en amont de l'éolienne, par définition, il correspond au rapport des vitesses entre ces plans. En notant a le facteur d'induction, u la vitesse du vent, et d1 et d2 les distances respectives des deux plans considérés par rapport au plan du rotor, le facteur d'induction entre les plans situés aux distances d1 et d2 du plan du rotor peut s'écrire :

[Math 1]

$$a_{d1,d2} = \frac{u_{d1}}{u_{d2}}$$

Lorsqu'un des plans considérés est le plan du rotor, on note d1=0.

Pour cette étape, on peut déterminer le facteur d'induction par toute méthode. Par exemple non limitatif, on peut mettre en oeuvre le procédé de détermination d'un facteur d'induction tel que décrit dans la demande de brevet dont le numéro de dépôt est FR 1871455, dont on décrit les étapes ci-dessous.

Le procédé de détermination d'un facteur d'induction du vent entre un plan de mesure et le plan de rotor d'un éolienne comporte les étapes suivantes :

A - Mesure de la vitesse du vent

Cette étape est identique à l'étape 1) du procédé de prédiction selon l'invention, pour au moins trois plans de mesure. De préférence, une unique série de mesures peut être réalisée pour les étapes 1) et 2)A.

B - Détermination de facteurs d'induction entre plans de mesure

Lors de cette étape, on détermine, en temps réel, au moins deux facteurs d'induction du vent entre deux plans de mesure. En d'autres termes, on détermine a minima un premier facteur d'induction du vent entre un premier plan de mesure et un deuxième plan de mesure, et un deuxième facteur d'induction du vent entre un troisième plan de mesure et un quatrième plan de mesure (au maximum un des troisième et quatrième plans de mesure correspond à l'un des premier et deuxième plans de mesure). De manière simplifiée, on appelle ces facteurs d'induction, facteurs d'induction entre plans de mesure dans la suite de la description.

Selon l'invention, on détermine les facteurs d'induction entre plans de mesure, au moyen des mesures de la vitesse du vent et au moyen d'un filtre de Kalman, notamment un filtre de Kalman linéaire.

Avantageusement, pour cette étape et pour le mode de réalisation pour lequel on réalise la mesure pour au moins quatre plans de mesure, on peut déterminer au moins trois facteurs d'induction du vent entre plans de mesure. Ainsi, il est possible d'augmenter la précision du phénomène de freinage du vent en amont de l'éolienne et par conséquent la précision de l'estimation du facteur d'induction du vent au niveau du plan du rotor.

Selon un mode de réalisation de l'invention, on peut déterminer un facteur d'induction entre plans de mesure pour le plan de mesure le plus proche du plan du rotor, de manière à avoir une information relative au champ de vent le plus proche possible du plan du rotor.

Conformément à une mise en oeuvre de l'invention, on peut déterminer les facteurs d'induction du vent entre plans de mesure, pour des plans de mesure ayant le même espacement. Par exemple, l'espacement peut être de 50 m et on peut déterminer un premier facteur d'induction pour des plans de mesure situés à 70 et 120 m, et un deuxième facteur d'induction pour des plans de mesure situés à 90 et 140 m.

De préférence, l'espacement entre les plans de mesure utilisés pour les facteurs d'induction du vent entre plans de mesure peut être identique à la distance entre le plan du rotor et le plan de mesure le plus proche. Ainsi, le modèle du facteur d'induction est simplifié, ce qui facilite notamment la résolution du filtre de Kalman.

Par exemple, en combinant les variantes décrites ci-dessus, si le premier plan de mesure est à 50 m du plan du rotor, on peut déterminer un premier facteur d'induction pour des plans de mesure situés à 50 et 100 m, un deuxième facteur d'induction pour des plans de mesure situés à 70 et 120 m et un troisième facteur d'induction pour des plans de mesure situés à 90 et 140 m.

Selon un mode de réalisation de l'invention, le filtre de Kalman peut être mis en oeuvre au moyen des différentes étapes décrites ci-dessous. Les étapes sont décrites pour un mode de réalisation pour lequel on détermine un premier facteur d'induction $a_{50,100}$ pour des plans de mesure situés à 50 et 100, un deuxième facteur d'induction $a_{70,120}$ pour des plans de mesure situés à 70 et 120 m et un troisième facteur d'induction $a_{90,140}$ pour des plans de mesure situés à 90 et 140 m.

Dans ce qui suit, on montre seulement comment estimer $a_{50,100}$ en temps réel. $a_{70,120}$ et $a_{90,140}$ sont obtenus exactement de la même manière. Puisque $u_{50}$, $u_{100}$ sont disponibles en temps réel, on pourrait utiliser directement l'équation de définition du facteur d'induction pour déterminer $a_{50,100}$. Cependant, cette méthode présente des inconvénients. En effet, les informations sur l'écart type des vitesses de vent estimées $u_{50}$, $u_{100}$ ne sont pas utilisées. On ne peut donc pas connaître l'écart type de l'estimation $a_{50,100}$. D'autre part, on pourrait avoir un problème de stabilité de calcul pour les petites vitesses, c'est-à-dire lorsque $u_{100}$ est proche de zéro.

On note $a_{50,100}(k)$ comme facteur d'induction au temps k. Il est clair que la variation $a_{50,100}(k)-a_{50,100}(k-1)$ est relativement faible. Par conséquent, on peut écrire :

[Math 2]

$$a_{50,100}(k) = a_{50,100}(k-1) + \eta(k-1)$$

où $\eta(k-1)$ est utilisé pour décrire la variation de $a_{50,100}(k)$ dans le temps.

On réécrit la première équation de définition du facteur d'induction comme

$$u_{100}(k)a_{50,100}(k) = u_{50}(k)$$

Puisque les estimations $u_{50}(k)$, $u_{100}(k)$ contiennent du bruit, un modèle plus réaliste de l'équation ci-dessus est :

[Math 3]

$$(u_{100}(k) + \epsilon_{100}(k))a_{50,100}(k) = u_{50}(k) + \epsilon_{50}(k)$$

où $\varepsilon_{50}(k)$, $\varepsilon_{100}(k)$ sont les bruits pour $u_{50}(k)$, $u_{100}(k)$, respectivement. On peut alors récrire l'équation précédente comme :

[Math 4 ]

$$u_{100}(k)a_{50,100}(k) = u_{50}(k) + \epsilon_{50}(k) - \epsilon_{100}(k)a_{50,100}(k)$$

En combinant les équations précédentes, on obtient l'équation d'état suivante :

[Math 5]

$$\begin{cases} a_{50,100}(k) &= a_{50,100}(k-1) + \eta(k-1), \\ u_{50}(k) &= u_{100}(k)a_{50,100}(k) + \mu(k) \end{cases}$$

[Math 6]

$$\mu(k) = \epsilon_{100}(k)a_{50,100}(k) - \epsilon_{50}(k)$$

Une façon d'estimer le vecteur d'état inconnu $a_{50,100}(k)$ pouvant prendre en compte des informations sur $\varepsilon(k)$ et $\mu(k)$ consiste à appliquer un algorithme de filtrage de Kalman, appelé filtre de Kalman. En pratique, ce filtre fournit la solution du problème suivant :

[Math 7]

$$\min_{a_{50,100}(k)} J(k)$$

avec

[Math 8]

$$J(k) = \left(a_{50,100}(0) - \overline{a}_{50,100}(0)\right)^T P_0^{-1}\left(a_{50,100}(0) - \overline{a}_{50,100}(0)\right) + \sum_{j=1}^{k}\left(\eta(j-1)^T Q^{-1}\eta(k-1) + \mu(j)^T R^{-1}\mu(j)\right)$$

ou $P_0$, $Q,R$ sont des matrices de pondération de dimension appropriée, $a_{50,100}(0)$ recouvert d'une barre est la valeur moyenne de l'état initial $a_{50,100}(0)$.

Afin de résoudre le problème d'optimisation, en utilisant l'algorithme de filtrage de Kalman, les hypothèses suivantes sont formulées. Ces hypothèses concernent principalement une interprétation mathématique pour $P_0$, Q et R.

- $a_{50,100}(0)$ est un vecteur aléatoire non corrélé aux bruits $\varepsilon(k)$ et $\mu(k)$.
- $a_{50,100}(0)$ a une moyenne connue avec $P_0$ comme matrice de covariance, c'est-à-dire

[Math 9]

$$P_0 = E\left[\left(a_{50,100}(0) - \overline{a}_{50,100}(0)\right)\left(a_{50,100}(0) - \overline{a}_{50,100}(0)\right)^T\right]$$

avec (0) la valeur moyenne de l'état initial
- $\varepsilon(k)$ et $\mu(k)$ sont des bruits blancs à moyenne nulle et non corrélés avec des matrices de covariance Q et $R$, respectivement, c'est-à-dire

[Math 10]

$$E[\eta(k)\eta(j)^T] = \begin{cases} Q, & \text{if} \quad k = j, \\ 0, & \text{if} \quad k \neq j \end{cases}$$
$$E[\mu(k)\mu(j)^T] = \begin{cases} R, & \text{if} \quad k = j, \\ 0, & \text{if} \quad k \neq j \end{cases}$$
$$E[\eta(k)\mu(j)^T] = 0, \text{ for all } k, j$$

On note que cette hypothèse implique également que $Q$ et $R$ sont des matrices symétriques positives semi-définies.

Les notations suivantes sont adoptées,

- $\hat{a}_{50,100}(k|k-1)$ est l'estimation de $a_{50,100}(k)$ étant donné des mesures de temps k - 1.
- $\hat{a}_{50,100}(k|k)$ est l'estimation de $a_{50,100}(k)$ étant donné des mesures de temps k
- P(k|k - 1) est la matrice de covariance de $a_{50,100}(k)$ étant donné des mesures de temps k - 1.
- P(k|k) est la matrice de covariance de $a_{50,100}(k)$ étant donné des mesures de temps k. Ensuite, l'algorithme de filtrage de Kalman peut être résumé comme suit,
- Équation de mise à jour du temps,

[Math 11]

$$\begin{cases} \hat{a}_{50,100}(k|k-1) & = \hat{a}_{50,100}(k-1|k-1) \\ P(k|k-1) & = P(k-1|k-1) + Q \end{cases}$$

- Équation de mise à jour des mesures,

[Math 12]

$$\begin{cases} K(k) & = P(k|k-1)u_{100}(k)^T \left( P(k|k-1) + u_{100}(k)Ru_{100}(k)^T \right)^{-1} \\ \hat{a}_{50,100}(k|k) & = \hat{a}_{50,100}(k|k-1) + K(k)\left(u_{50}(k) - u_{100}(k)\hat{x}(k|k-1)\right), \\ P(k|k) & = \left(I - K(k)\right)P(k|k-1) \end{cases}$$

En appliquant ces étapes, on peut détermine le facteur d'induction $a_{50,100}$. On réitère ces étapes pour déterminer les facteurs d'induction $a_{70,120}$ et $a_{90,140}$.

C - Détermination du facteur d'induction entre un plan de mesure et le plan de rotor

Lors de cette étape, on détermine, en temps réel, le facteur d'induction du vent entre un des plans de mesures et le plan du rotor. Ainsi, on peut représenter l'évolution du vent au niveau du rotor, en prenant en compte les phénomènes physiques, en particulier le freinage du vent. Selon l'invention, on détermine le facteur d'induction du vent entre un plan de mesure et le plan du rotor au moyens des facteurs d'induction déterminés à l'étape précédente et au moyen d'un filtre de Kalman, notamment un filtre de Kalman linéaire. De manière simplifiée, on appelle ce facteur d'induction, facteur d'induction dans le plan du rotor dans la suite de la description.

De préférence, on peut déterminer le facteur d'induction du vent entre le plan de mesure le plus proche du rotor et le plan du rotor.

Par exemple, lors de cette étape, on peut déterminer le facteur d'induction entre un plan de mesure situé à 50 m du rotor et le plan du rotor.

Selon un mode de réalisation de l'invention, le filtre de Kalman peut être mis en oeuvre au moyen des différentes étapes décrites ci-dessous. Les étapes sont décrites pour un mode de réalisation pour lequel on a déterminé $a_{50,100}$, $a_{70,120}$ et $a_{90,140}$ et pour lequel on détermine $a_{0,50}$, c'est-à-dire le facteur d'induction entre un plan de mesure situé à 50 m et le plan du rotor.

En utilisant $a_{50,100}$, $a_{70,120}$ et $a_{90,140}$, l'idée principale d'estimer $a_{0,50}$ est de supposer que $a_{0,50}$, $a_{50,100}$, $a_{70,120}$ et $a_{90,140}$ sont fonction de la distance. Dans ce but, la relation suivante est supposée

[Math 13]

$$\begin{cases} a_{0,50} & = 0x_1 + x_2, \\ a_{50,100} & = 50x_1 + x_2, \\ a_{70,120} & = 70x_1 + x_2, \\ a_{90,140} & = 90x_1 + x_2 \end{cases}$$

où x1, x2 sont des paramètres inconnus, qui doivent être déterminés. Comme $a_{50,100}$, $a_{70,120}$ et $a_{90,140}$ changent lentement au fil du temps, il en va de même pour x1 et x2. Par conséquent, on peut écrire

[Math 14]

$$\begin{cases} x_1(k) & = x_1(k-1) + \zeta_1(k-1), \\ x_2(k) & = x_2(k-1) + \zeta_2(k-1) \end{cases}$$

où $\zeta 1(k)$, $\zeta 2(k)$ sont utilisés pour caractériser la variation de x1(k), x2(k). On note

[Math 15]

$$x(k) = \begin{bmatrix} x_1(k) \\ x_2(k) \end{bmatrix}, \; \zeta(k) = \begin{bmatrix} \zeta_1(k) \\ \zeta_2(k) \end{bmatrix}$$

On peut alors écrire sous forme compacte :

$$x(k) = x(k - 1) + \zeta (k - 1)$$

Un modèle plus réaliste qui prend en compte les bruits est le suivant :

[Math 16]

$$\begin{cases} a_{50,100}(k) & = [50\ 1]\,x(k) + \epsilon_1(k), \\ a_{70,120}(k) & = [70\ 1]\,x(k) + \epsilon_2(k), \\ a_{90,140}(k) & = [90\ 1]\,x(k) + \epsilon_3(k), \end{cases}$$

où $\epsilon 1$, $\epsilon 2$, $\epsilon 3$ sont les bruits des estimations $a_{50,100}(k)$, $a_{70,120}(k)$ et $a_{90,140}(k)$. On peut alors noter :

[Math 17]

$$y(k) = \begin{bmatrix} a_{50,100}(k) \\ a_{70,120}(k) \\ a_{90,140}(k) \end{bmatrix}, \quad C = \begin{bmatrix} 50 & 1 \\ 70 & 1 \\ 90 & 1 \end{bmatrix}, \quad \epsilon(k) = \begin{bmatrix} \epsilon_1(k) \\ \epsilon_2(k) \\ \epsilon_3(k) \end{bmatrix}$$

On peut alors écrire sous une forme compacte

$$y(k) = Cx(k) + \varepsilon (k)$$

En combinant les précédentes équations, on obtient l'équation d'état suivante

[Math 18]

$$\begin{cases} x(k) & = x(k-1) + \zeta(k-1) \\ y(k) & = Cx(k) + \epsilon(k) \end{cases}$$

Comme pour $a50,100(k)$, $a70,120(k)$, $a90,140(k)$, une façon d'obtenir $x(k)$ qui prend en compte les bruits $\zeta(k)$, $\varepsilon(k)$ utilise la technique du filtre linéaire de Kalman. Pour cela, on applique les mêmes étapes que celles décrites pour l'étape précédente.

Une fois que $x(k)$ est estimé, le facteur d'induction $a_{0,50}$ peut être calculé comme suit :

$$a_{0,50}(k) = [0\ 1]x(k).$$

3) Détermination d'un indice de retard

Lors de cette étape, on détermine un indice de retard au moyen des mesures de la vitesse du vent (éventuellement les mesures reconstruites) et au moyen du facteur d'induction. L'indice de retard définit le retard temporel du vent entre le plan de mesure et le plan du rotor de l'éolienne. La dépendance de l'indice de retard avec le facteur d'induction permet de prendre en compte les phénomènes physiques (l'induction) dans la détermination du retard, ce qui permet de rendre la prédiction du vent plus représentative des conditions réelles.

Selon un mode de réalisation de l'invention, on peut déterminer l'indice de retard $k_{d0}$ par une équation :

[Math 19]

$$k_{d0} = \frac{2x_1}{(U_{x1} + U_0)T_s}$$

$$U_0 = a_{0,x_1} U_{x_1}$$

avec $x_1$ la distance entre ledit plan de mesure et ledit plan de rotor, $T_s$ la période d'échantillonnage de la mesure, $U_{x1}$ la vitesse moyenne de vent mesurée dans ledit plan de mesure (déterminée à partir des mesures), $U_0$ la vitesse moyenne de vent dans ledit plan de rotor, et $a_{0,x1}$ ledit facteur d'induction entre ledit plan de mesure et ledit plan de rotor déterminée à l'étape précédente.

### 4) Construction d'un modèle d'évolution du vent

Lors de cette étape, on construit un modèle d'évolution du vent. Un modèle d'évolution du vent traduit l'évolution de la vitesse du vent entre le plan de mesure et le plan du rotor de l'éolienne. Le modèle d'évolution du vent relie la vitesse du vent dans le plan du rotor à un instant t1 prédéterminé (t1 étant un instant futur, instant de la prédiction de la vitesse du vent dans le plan du rotor), à la vitesse du vent mesurée dans le plan de mesure à plusieurs instants antérieurs à l'instant t1, au moyen du facteur d'induction. Les instants antérieurs à l'instant t1 sont déterminés au moyen de l'indice de retard. La dépendance du modèle d'évolution du vent avec le facteur d'induction et avec l'indice de retard permet de prendre en compte les phénomènes physiques (induction) dans la détermination de l'évolution du vent, ce qui permet de rendre la prédiction du vent plus représentative des conditions réelles. De plus, la prise en compte de plusieurs instants antérieurs permet de prendre en compte un plus grand nombre d'informations relatives au vent de manière à améliorer la prédiction.

De préférence, les instants antérieurs à l'instant t1 peuvent être des instants situés autour d'un instant t2 qui correspond à l'instant t1 moins le retard lié au déplacement du vent. En d'autres termes, l'instant t2 peut être déterminé au moyen de l'indice de retard $k_{d0}$ par une formule du type :

[Math 20]

$$t2 = t1 - k_{d0} \times T_s$$

Avec Ts la période d'échantillonnage de la mesure.

Les instants antérieurs pris en compte dans le modèle peuvent alors être des instants t, tel que :

[Math 21]

$$t = t2 \pm n \times T_s$$

Avec n un nombre entier positif ou nul inférieur ou égal à Nd qui est l'ordre du modèle de l'évolution du vent.

Selon un mode de réalisation de l'invention, le modèle d'évolution du vent peut s'écrire :

[Math 22]

$$u_0(k+p) = \tilde{U}_{x_1}(k - k_{d0} + p)^T \mathbf{r}(k|k)$$

$$\tilde{U}_{x_1}(k - k_{d0} + p) = [\tilde{u}_{x_1}(k - k_{d0} + p) \quad \tilde{u}_{x_1}(k - k_{d0} + p - 1) \quad \tilde{u}_{x_1}(k - k_{d0} + p + 1) \quad \dots$$
$$\dots \quad \tilde{u}_{x_1}(k - k_{d0} + p + N_d)]^T$$

$$\tilde{u}_{x_1}(k) = a_{0,x_1} u_{x_1}(k)$$

avec $u_0$ le vent dans le plan du rotor, k le temps discrétisé, p le pas de temps futur, $k_{d0}$ l'indice de retard, r le vecteur d'état déterminé par le filtre de Kalman (lors de l'étape 5)), $x_1$ le plan de mesure, $N_d$ l'ordre du modèle d'évolution du vent, $u_{x1}$ la vitesse du vent mesurée dans le plan de mesure (éventuellement reconstruite), et $a_{0,x1}$ le facteur d'induction entre le plan de mesure et ledit plan de rotor déterminé à l'étape 2).

De préférence, afin de limiter le temps de calcul, l'ordre du modèle d'évolution du vent $N_d$ peut valoir 2.

5) Détermination de la prédiction de la vitesse du vent

Afin de pouvoir appliquer le modèle d'évolution du vent construit à l'étape précédente pour déterminer la prédiction de la vitesse du vent dans le plan du rotor, on applique un filtre de Kalman pour déterminer le vecteur d'état r du modèle d'évolution du vent. De préférence, on applique un filtre de Kalman adaptatif.

Pour cette étape, les notations $\eta(k)$, $\mu(k)$, J(k), P0, Q et R sont spécifiques à cette étape (les mêmes notations sont utilisées de manière indépendante à l'étape 2)).

Selon un mode de réalisation de l'invention, cette étape consiste à identifier le vecteur r défini par les valeurs $r_0$, $r_{-1}$, $r_1$, ..., $r_{-Nd}$, $r_{Nd}$. Pour caractériser la nature variable de l'évolution du vent, on utilise le modèle suivant : j = $-N_d$, $-N_d+1$, ..., 0, ..., $N_d-1$, $N_d$.

[Math 23]

$$r_j(k) = r_j(k-1) + \eta_j(k-1)$$

Où $n_j(k-1)$ est utilisé pour décrire la variation de $r_j(k)$.

Cette équation peut être réécrite sous une forme de vecteur compacte comme

[Math 24]

$$\mathbf{r}(k) = \mathbf{r}(k-1) + \eta(k-1)$$

où

$$\begin{cases} \mathbf{r}(k) = [r_0(k) \quad r_{-1}(k) \quad r_1(k) \quad \dots \quad r_{-N_d}(k) \quad r_{N_d}(k)]^T \\ \eta(k) = [\eta_0(k) \quad \eta_{-1}(k) \quad \eta_1(k) \quad \dots \quad \eta_{-N_d}(k) \quad \eta_{N_d}(k)]^T \end{cases}$$

On peut alors écrire :

[Math 25]

$$\tilde{U}_{x_2}(k - k_d)^T \mathrm{r}(k) = u_{x_1}(k)$$

Avec

[Math 26]

$$\tilde{U}_{x_2}(k - k_d) = [\tilde{u}_{x_2}(k - k_d) \quad \tilde{u}_{x_2}(k - k_d - 1) \quad \tilde{u}_{x_2}(k - k_d + 1) \quad \dots \quad \tilde{u}_{x_2}(k - k_d + N_d)]^T$$

On peut noter que les valeurs de u de cette équation sont des valeurs estimées contenant des bruits. Par conséquent un modèle plus réaliste de cette équation peut être

[Math 27]

$$(\tilde{U}_{x_2}(k - k_d)^T + \epsilon_{x_2}(k - k_d)^T)\mathrm{r}(k) = u_{x_1}(k) + \epsilon_{x_1}(k)$$

Où $\varepsilon_{x1}(k)$ et $\varepsilon_{x2}(k - k_d)$ sont des bruits pour $u_{x1}(k)$ et $\tilde{U}_{x2}(k - k_d)$ respectivement. On peut alors réécrire l'équation précédente comme

[Math 28]

$$\tilde{U}_{x_2}(k - k_d)^T \mathrm{r}(k) = u_{x_1}(k) + \epsilon_{x_1}(k) - \epsilon_{x_2}(k - k_d)^T \mathrm{r}(k)$$

On peut alors obtenir l'équation d'espace d'état suivante :

[Math 29]

$$\begin{cases} \mathrm{r}(k) & = \mathrm{r}(k - 1) + \eta(k - 1) \\ \tilde{U}_{x_2}(k - k_d)^T \mathrm{r}(k) & = u_{x_1}(k) + \mu(k) \end{cases}$$

Avec

[Math 30]

$$\mu(k) = \epsilon_{x_1}(k) - \epsilon_{x_2}(k - k_d)^T \mathrm{r}(k)$$

$\mu(k)$ étant le bruit de mesure. Il convient de noter que ce bruit dépend de l'estimation de l'état r(k). En d'autres termes, la matrice de covariance des mesures est fonction de r(k).

Une façon d'estimer le vecteur d'état inconnu r(k) qui peut prendre en compte des informations sur $\eta(k)$ et $\mu(k)$ consiste à appliquer un filtre de Kalman. En pratique, le filtre de Kalman apporte la solution au problème suivant :

[Math 31]

$$\min_{\mathbf{r}(k)} J(k)$$

Avec

[Math 32]

$$J(k) = (\mathbf{r}(0) - \bar{\mathbf{r}}(0))^T P_0^{-1}(\mathbf{r}(0) - \bar{\mathbf{r}}(0)) + \sum_{j=1}^{k} \left( \eta(j-1)^T Q^{-1} \eta(j-1) + \mu(j)^T R^{-1} \mu(j) \right)$$

Avec $P_0$, Q, R des matrices de pondération de dimensions appropriées, $\bar{r}(0)$ la valeur moyenne de r(0).

Afin de résoudre le problème d'optimisation à l'aide du filtre de Kalman, les hypothèses suivantes sont formulées. Ces hypothèses concernent principalement une interprétation mathématique de $P_0$, Q, R.

- r(0) est un vecteur aléatoire non corrélé aux bruits η(k) et μ(k)
- r(0) a une moyenne connue $\bar{r}(0)$ avec $P_0$ comme matrice de covariance, c'est-à-dire :

[Math 33]

$$P_0 = E\left[(\mathbf{r}(0) - \bar{\mathbf{r}}(0))(\mathbf{r}(0) - \bar{\mathbf{r}}(0))^T\right]$$

- η(k) et μ(k) sont des processus de bruit blanc de moyenne zéro non corrélés, c'est-à-dire :

[Math 34]

$$E\left[\eta(k)\eta(j)^T\right] = 0, \forall k \neq j,$$
$$E\left[\mu(k)\mu(j)^T\right] = 0, \forall k \neq j,$$
$$E\left[\eta(k)\mu(j)^T\right] = 0, \forall k, j$$

- η(k) a une matrice de covariance Q, c'est-à-dire :

[Math 35]

$$E\left[\eta(k)\eta(k)^T\right] = Q$$

Pour le bruit de mesure, on obtient :

[Math 36]

$$E\left[\eta(k)\eta(k)^T\right] = E\left[\left(\epsilon_{x_1}(k) - \epsilon_{x_2}(k-k_d)^T\mathbf{r}(k)\right)\left(\epsilon_{x_1}(k) - \epsilon_{x_2}(k-k_d)^T\mathbf{r}(k)\right)^T\right]$$

$$E\left[\eta(k)\eta(k)^T\right] = E(\epsilon_{x_1}(k)\epsilon_{x_1}(k)^T) + \mathbf{r}(k)^T E(\epsilon_{x_2}(k-k_d)\epsilon_{x_2}(k-k_d)^T)\mathbf{r}(k)$$

$$R = E(\epsilon_{x_1}(k)\epsilon_{x_1}(k)^T) + \mathbf{r}(k)^T E(\epsilon_{x_2}(k-k_d)\epsilon_{x_2}(k-k_d)^T)\mathbf{r}(k)$$

On peut noter que la matrice de covariance du bruit de mesure dépend de l'état estimé r(k).
Les notations suivantes sont adoptés :

- r(k|k - 1) est l'estimation de r(k) à partir du temps k-1
- r(k|k) est l'estimation de r(k) à partir des mesures du temps k
- P(k|k - 1) est la matrice de covariance d'erreur de r(k) à partir des mesures du temps k - 1
- P(k|k) est matrice de covariance d'erreur de r(k) à partir des mesures du temps k.

Ensuite, le filtre de Kalman peut être résumé de la manière suivante :

- Prédiction

[Math 37]

$$\begin{cases} \mathbf{r}(k|k-1) & = \mathbf{r}(k-1|k-1), \\ P(k|k-1) & = P(k-1|k-1) + Q \end{cases}$$

- Correction

[Math 38]

$$\begin{cases} S(k) & = \tilde{U}_{x_2}(k-k_d)P(k|k-1)\tilde{U}_{x_2}(k-k_d)^T + R \\ K(k) & = P(k|k-1)\tilde{U}_{x_2}(k-k_d)^T S(k)^{-1} \\ \mathbf{r}(k|k) & = \mathbf{r}(k|k-1) + K(k)(u_{x_1}(k) - \tilde{U}_{x_2}(k-k_d)\mathbf{r}(k|k-1)) \\ P(k|k) & = (I - K(k))P(k|k-1) \end{cases}$$

Ainsi, ce filtre de Kalman permet de déterminer le vecteur d'état r, qui est ensuite intégré dans le modèle d'évolution du vent déterminé à l'étape précédente, afin de déterminer la prédiction du vent dans le plan du rotor.
La présente invention concerne également un procédé de contrôle d'une éolienne équipée d'un capteur LIDAR. Pour ce procédé, on met en oeuvre les étapes suivantes :

- on prédit la vitesse du vent dans le plan du rotor au moyen du procédé de prédiction de la vitesse du vent selon l'une quelconque des variantes décrites ci-dessus ;

- on contrôle l'éolienne en fonction de la vitesse du vent au niveau du plan du rotor.

La prédiction précise et en temps réel de la vitesse du vent dans le plan du rotor permet un contrôle adapté de l'éolienne, en termes de minimisation des effets sur la structure de l'éolienne et de maximisation de la puissance récupérée. En effet, au moyen de ce contrôle, le LIDAR permet de réduire les charges sur la structure, dont les pales et le mât représentent 54% du coût. Par conséquent, l'utilisation d'un capteur LIDAR permet d'optimiser la structure de l'éolienne, et donc de diminuer les coûts et la maintenance.

Conformément à une mise en oeuvre de l'invention, on peut commander l'angle d'inclinaison des pales et/ou le couple électrique de récupération du générateur de l'éolienne en fonction de la vitesse du vent. D'autres types de dispositif de régulation peuvent être utilisés.

Selon un mode de réalisation de l'invention, l'angle d'inclinaison des pales et/ou le couple électrique de récupération sont déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

De plus, l'invention concerne un produit programme d'ordinateur, qui comprend des instructions de code agencés pour mettre en oeuvre les étapes d'un des procédés précédemment décrits (procédé de détermination de la vitesse dans le plan du rotor, procédé de contrôle). Le programme est exécuté sur une unité de traitement du capteur LIDAR, ou sur tout moyen analogue, lié au capteur LIDAR ou à l'éolienne.

Selon un aspect, la présente invention concerne également un capteur LIDAR pour éolienne, qui comprend une unité de traitement configurée pour mettre en oeuvre un des procédés précédemment décrits (procédé de détermination de la vitesse dans le plan du rotor, procédé de contrôle).

Conformément à une mise en oeuvre de l'invention, le capteur LIDAR peut être un capteur LIDAR scanné, LIDAR continu ou LIDAR pulsé. De préférence, le capteur LIDAR est un capteur LIDAR pulsé.

L'invention concerne également une éolienne, notamment une éolienne offshore (en mer) ou onshore (sur terre) équipée d'un capteur LIDAR tel que décrit ci-dessus. Selon un mode de réalisation de l'invention, le capteur LIDAR peut être disposé sur la nacelle de l'éolienne ou dans le nez de l'éolienne. Le capteur LIDAR est dirigé de telle sorte à réaliser une mesure du vent en amont de l'éolienne (c'est-à-dire avant l'éolienne et selon son axe longitudinal, désigné par l'axe x sur la figure 1). Selon un mode de réalisation, l'éolienne peut être conforme à l'éolienne illustrée en figure 1.

Pour le mode de réalisation du procédé de contrôle, l'éolienne peut comprendre des moyens de contrôle, par exemple le contrôle de l'angle de pitch (pouvant être traduit par angle de tangage) d'au moins une pale de l'éolienne ou le couple électrique, pour mettre en oeuvre de contrôle le procédé selon l'invention.

## Exemples

Les caractéristiques et avantages du procédé de prédiction selon l'invention ressortiront plus clairement à l'aide des exemples comparatifs présentés ci-dessous.

Pour ces exemples, on compare la vitesse du vent dans le plan du rotor prédite avec un procédé selon l'art antérieur pour lequel on applique l'hypothèse de turbulence gelée de Taylor, et la vitesse du vent dans le plan du rotor prédite avec un procédé selon l'invention, pour une éolienne équipée d'un capteur LIDAR.

Afin de valider le procédé selon l'invention, on fait l'hypothèse que l'éolienne se trouve dans le plan de mesure à 50 m : ainsi grâce aux mesures du capteur LIDAR, on considère une référence qui est la vitesse mesurée moyennée du vent dans le plan de mesure à 50 m, et on applique le procédé selon l'art antérieur et le procédé selon l'invention pour estimer la vitesse du vent dans le plan de mesure à 50 m à partir d'un plan de mesures éloigné du plan de mesure à 50 m, par exemple un plan de mesure à 100 m.

La figure 4 est une courbe illustrant la vitesse moyennée du vent dans le plan du rotor RAWS (vitesse moyenne du vent dans le plan du rotor dans l'aire formée par les pales de l'éolienne) en m/s en fonction du temps T en s. La figure 4 correspond à une prédiction à l'instant t=0s (temps réel). Sur cette figure est représentée la vitesse moyennée du vent de référence REF, la vitesse moyennée du vent prédite avec un procédé selon l'art antérieur AA pour lequel on applique l'hypothèse de turbulence gelée de Taylor, et la vitesse moyennée du vent prédite avec un procédé selon l'invention INV. On observe que la vitesse du vent estimée par le procédé selon l'invention INV est plus représentative de la vitesse de référence REF que la vitesse du vent estimée par le procédé selon l'art antérieur AA.

La figure 5 est une courbe illustrant la vitesse moyennée du vent dans le plan du rotor RAWS en m/s en fonction du temps T en s. La figure 5 correspond à une prédiction à l'instant t=1s (prédiction à 1s du temps réel). Sur cette figure est représentée la vitesse moyennée du vent de référence REF, et la vitesse moyennée du vent prédite avec un procédé selon l'invention INV. On observe que la vitesse du vent estimée par le procédé selon l'invention INV est proche de la vitesse de référence REF.

La figure 6 est une courbe illustrant la vitesse moyennée du vent dans le plan du rotor RAWS en m/s en fonction du temps T en s. La figure 6 correspond à une prédiction à l'instant t=2s (prédiction à 2s du temps réel). Sur cette figure est représentée la vitesse moyennée du vent de référence REF, et la vitesse moyennée du vent prédite avec un procédé selon l'invention INV. On observe que la vitesse du vent estimée par le procédé selon l'invention INV est proche de la vitesse de référence REF.

Ainsi, le procédé selon l'invention permet une bonne précision de la prédiction de la vitesse du vent dans le plan du rotor.

**Revendications**

1.  Procédé de prédiction de la vitesse du vent dans le plan du rotor d'une éolienne (1) équipée d'un capteur LIDAR (2), dans lequel on met en oeuvre les étapes suivantes :

    a) On mesure la vitesse du vent en au moins un plan de mesure (PM) distant de ladite éolienne (1) au moyen dudit capteur LIDAR (2) ;
    b) On détermine un facteur d'induction du vent, ledit facteur d'induction du vent représentant un coefficient de freinage du vent entre ledit plan de mesure et ledit plan dudit rotor ;
    c) On détermine un indice de retard entre ledit plan de mesure (PM) et ledit plan du rotor (PR) de ladite éolienne (1) au moyen dudit facteur d'induction et de ladite mesure de vitesse du vent dans ledit plan de mesure ;
    d) On construit un modèle d'évolution du vent entre ledit plan de mesure (PM) et ledit plan dudit rotor (PR), ledit modèle d'évolution du vent reliant la vitesse du vent dans ledit plan dudit rotor (PR) à un instant prédéterminé, à la vitesse mesurée du vent dans ledit plan de mesure (PM) à plusieurs instants antérieurs audit instant prédéterminé, au moyen dudit facteur d'induction, lesdits instants antérieurs étant déterminés au moyen dudit indice de retard ;
    e) On détermine ladite prédiction de la vitesse du vent dans ledit plan du rotor au moyen dudit modèle d'évolution du vent et d'un filtre de Kalman, de préférence un filtre de Kalman adaptatif.

2.  Procédé de prédiction selon la revendication 1, dans lequel on détermine un facteur d'induction du vent, en mettant en oeuvre les étapes suivantes :

    i) on mesure la vitesse du vent en au moins trois plans de mesure (PM) distants de ladite éolienne au moyen dudit capteur LIDAR (2) ;
    ii) on détermine au moins deux facteurs d'induction du vent entre deux desdits plans de mesure (PM) au moyen desdites mesures de la vitesse du vent auxdits plans de mesure et d'un filtre de Kalman linéaire ; et
    iii) on détermine ledit facteur d'induction du vent entre un plan de mesure (PM) et ledit plan du rotor (PR) de ladite éolienne (1) au moyen desdits facteurs d'induction entre deux plans de mesure (PM) déterminés et au moyen d'un filtre de Kalman linéaire.

3.  Procédé de prédiction selon l'une des revendications précédentes, dans lequel ladite étape de mesure de la vitesse du vent comprend une sous-étape de reconstruction du champ de vent dans ledit plan de mesure (PM), ce champ de vent reconstruit étant utilisé dans les autres étapes du procédé en tant que mesure de la vitesse du vent dans ledit plan de mesure.

4.  Procédé de prédiction selon l'une des revendications précédentes, dans lequel on détermine l'indice de retard $k_{d0}$ par une équation :

$$k_{d0} = \frac{2x_1}{(U_{x1} + U_0)T_s}$$

avec

$$U_0 = a_{0,x_1} U_{x_1}$$

avec $x_1$ la distance entre ledit plan de mesure (PM) et ledit plan de rotor (PR), $T_s$ la période d'échantillonnage de la mesure, $U_{x1}$ la vitesse moyenne du vent mesurée dans ledit plan de mesure (PM), $U_0$ la vitesse moyenne du vent dans ledit plan de rotor (PR), et $a_{0,x1}$ ledit facteur d'induction entre ledit plan de mesure (PM) et ledit plan de rotor (PR).

5.  Procédé de prédiction selon l'une des revendications précédentes, dans lequel ledit modèle d'évolution du vent

s'écrit :

$$u_0(k + p) = \tilde{U}_{x_1}(k - k_{d0} + p)^T \mathbf{r}(k|k)$$

avec

$$\tilde{U}_{x_1}(k - k_{d0} + p) = [\tilde{u}_{x_1}(k - k_{d0} + p) \ \tilde{u}_{x_1}(k - k_{d0} + p - 1) \ \tilde{u}_{x_1}(k - k_{d0} + p + 1) \ \ldots$$
$$\ldots \ \tilde{u}_{x_1}(k - k_{d0} + p + N_d)]^T$$

et

$$\tilde{u}_{x_1}(k) = a_{0,x_1} u_{x_1}(k)$$

avec $u_0$ le vent dans le plan du rotor (PR), k le temps discrétisé, p le pas de temps futur, $k_{d0}$ l'indice de retard, r le vecteur d'état déterminé par le filtre de Kalman, x1 le plan de mesure, $N_d$ l'ordre dudit modèle d'évolution du vent, $u_{x1}$ la vitesse du vent mesurée dans ledit plan de mesure (PM), et $a_{0,x1}$ ledit facteur d'induction entre ledit plan de mesure (PM) et ledit plan de rotor (PR).

6.  Procédé de prédiction selon la revendication 5, dans lequel l'ordre du modèle d'évolution du vent $N_d$ vaut 2.

7.  Procédé de contrôle d'une éolienne (1) équipée d'un capteur LIDAR (2), **caractérisé en ce qu'**on met en oeuvre les étapes suivantes :

    a) on détermine ladite prédiction de la vitesse du vent dans le plan du rotor (PR) de ladite éolienne (1) au moyen du procédé selon l'une des revendications précédentes ;
    b) on contrôle ladite éolienne (1) en fonction de ladite vitesse du vent au niveau du plan du rotor (PR).

8.  Produit programme d'ordinateur **caractérisé en ce qu'**il comprend des instructions de code agencés pour mettre en oeuvre les étapes d'un procédé selon l'une des revendications précédentes, lorsque le programme est exécuté sur une unité de traitement dudit capteur LIDAR (2).

9.  Capteur LIDAR (2) adapté pour mesurer la vitesse du vent en au moins un plan de mesure (PM) distant d'une éolienne **caractérisé en ce qu'**il comprend une unité de traitement mettant en oeuvre les étapes b) à e) d'un procédé selon l'une des revendications 1 à 7.

10. Eolienne (1) **caractérisée en ce qu'**elle comporte un capteur LIDAR (2) selon la revendication 9, ledit capteur LIDAR (2) étant de préférence placé sur la nacelle de ladite éolienne (1) ou dans le nez de l'éolienne.

**Patentansprüche**

1.  Verfahren zur Vorhersage der Windgeschwindigkeit in der Ebene des Rotors einer Windkraftanlage (1), die mit einem LIDAR-Sensor (2) ausgestattet ist, bei dem die folgenden Schritte umgesetzt werden:

    a) Messen der Windgeschwindigkeit in mindestens einer von der Windkraftanlage (1) entfernten Messebene (PM) mittels des LIDAR-Sensors (2);
    b) Bestimmen eines Induktionsfaktors des Windes, wobei der Induktionsfaktor des Windes einen Bremskoeffizienten des Windes zwischen der Messebene und der Ebene des Rotors repräsentiert;
    c) Bestimmen eines Verzögerungsindex zwischen der Messebene (PM) und der Ebene des Rotors (PR) der Windkraftanlage (1) mittels des Induktionsfaktors und der Messung der Windgeschwindigkeit in der Messebene;
    d) Aufbauen eines Verlaufsmodells des Windes zwischen der Messebene (PM) und der Ebene des Rotors (PR), wobei das Verlaufsmodell des Windes die Windgeschwindigkeit in der Ebene des Rotors (PR) zu einem vorherbestimmten Zeitpunkt mit der gemessenen Windgeschwindigkeit in der Messebene (PM) zu mehreren früheren Zeitpunkten vor dem vorherbestimmten Zeitpunkt mittels des Induktionsfaktors verbindet, wobei die früheren Zeitpunkte mittels des Verzögerungsindex bestimmt werden;

e) Bestimmen der Vorhersage der Windgeschwindigkeit in der Ebene des Rotors mittels des Verlaufsmodells des Windes und eines Kalman-Filters, bevorzugt eines adaptiven Kalman-Filters.

2. Verfahren zur Vorhersage nach Anspruch 1, bei dem ein Induktionsfaktor des Windes bestimmt wird, indem die folgenden Schritte umgesetzt werden:

i) Messen der Windgeschwindigkeit in mindestens drei von der Windkraftanlage entfernten Messebenen (PM) mittels des LIDAR-Sensors (2);

ii) Bestimmen von mindestens zwei Induktionsfaktoren des Windes zwischen zwei der Messebenen (PM) mittels der Messungen der Windgeschwindigkeit in den Messebenen und eines linearen Kalman-Filters; und

iii) Bestimmen des Induktionsfaktors des Windes zwischen einer Messebene (PM) und der Ebene des Rotors (PR) der Windkraftanlage (1) mittels der bestimmten Induktionsfaktoren zwischen zwei Messebenen (PM) und mittels eines linearen Kalman-Filters.

3. Verfahren zur Vorhersage nach einem der vorhergehenden Ansprüche, bei dem der Schritt des Messens der Windgeschwindigkeit einen Teilschritt des Rekonstruierens des Windfelds in der Messebene (PM) umfasst, wobei dieses rekonstruierte Windfeld in den anderen Schritten des Verfahrens als Messung der Windgeschwindigkeit in der Messebene verwendet wird.

4. Verfahren zur Vorhersage nach einem der vorhergehenden Ansprüche, bei dem der Verzögerungsindex $k_{d0}$ durch eine Gleichung bestimmt wird:

$$k_{d0} = \frac{2x_1}{(U_{x1} + U_0)T_s}$$

mit

$$U_0 = a_{0,x_1} U_{x_1},$$

worin $x_1$ die Entfernung zwischen der Messebene (PM) und der Rotorebene (PR) ist, $T_s$ die Abtastperiode der Messung ist, $U_{x1}$ die in der Messebene (PM) gemessene mittlere Windgeschwindigkeit ist, $U_0$ die in der Rotorebene (PR) gemessene mittlere Windgeschwindigkeit ist und $a_{0,x1}$ der Induktionsfaktor zwischen der Messebene (PM) und der Rotorebene (PR) ist.

5. Verfahren zur Vorhersage nach einem der vorhergehenden Ansprüche, bei dem sich das Verlaufsmodell des Windes wie folgt schreibt:

$$u_0(k + p) = \tilde{U}_{x_1}(k - k_{d0} + p)^T \mathbf{r}(k|k)$$

mit

$$\tilde{U}_{x_1}(k - k_{d0} + p) = [\tilde{u}_{x_1}(k - k_{d0} + p) \; \tilde{u}_{x_1}(k - k_{d0} + p - 1) \; \tilde{u}_{x_1}(k - k_{d0} + p + 1) \; \ldots$$
$$\ldots \; \tilde{u}_{x_1}(k - k_{d0} + p + N_d)]^T$$

und

$$\tilde{u}_{x_1}(k) = a_{0,x_1} u_{x_1}(k)$$
,

worin $u_0$ der Wind in der Ebene des Rotors (PR) ist, k die diskretisierte Zeit ist, p der zukünftige Zeitschritt ist, $k_{d0}$ der Verzögerungsindex ist, r der durch den Kalman-Filter bestimmte Zustandsvektor ist, x1 die Messebene ist, $N_d$ die Ordnung des Verlaufsmodells des Windes ist, $u_{x1}$ die in der Messebene (PM) gemessene Windgeschwindigkeit ist und $a_{0,x1}$ der Induktionsfaktor zwischen der Messebene (PM) und der Rotorebene (PR) ist.

6. Verfahren zur Vorhersage nach Anspruch 5, bei dem die Ordnung des Verlaufsmodells des Windes $N_d$ gleich 2 ist.

7. Verfahren zur Steuerung einer Windkraftanlage (1), die mit einem LIDAR-Sensor (2) ausgestattet ist, **dadurch gekennzeichnet, dass** die folgenden Schritte umgesetzt werden:

a) Bestimmen der Vorhersage der Windgeschwindigkeit in der Ebene des Rotors (PR) der Windkraftanlage (1) mittels des Verfahrens nach einem der vorhergehenden Ansprüche;
b) Steuern der Windkraftanlage (1) in Abhängigkeit von der Windgeschwindigkeit auf Höhe der Ebene des Rotors (PR) .

8. Computerprogrammprodukt, **dadurch gekennzeichnet, dass** es Codeanweisungen umfasst, die dazu eingerichtet sind, die Schritte eines Verfahrens nach einem der vorhergehenden Ansprüche umzusetzen, wenn das Programm auf einer Verarbeitungseinheit des LIDAR-Sensors (2) ausgeführt wird.

9. LIDAR-Sensor (2), der geeignet ist, die Windgeschwindigkeit in mindestens einer von einer Windkraftanlage entfernten Messebene (PM) zu messen, **dadurch gekennzeichnet, dass** er eine Verarbeitungseinheit umfasst, die die Schritte b) bis e) eines Verfahrens nach einem der Ansprüche 1 bis 7 umsetzt.

10. Windkraftanlage (1), **dadurch gekennzeichnet, dass** sie einen LIDAR-Sensor (2) nach Anspruch 9 umfasst, wobei der LIDAR-Sensor (2) bevorzugt an der Gondel der Windkraftanlage (1) oder in der Nase der Windkraftanlage angeordnet ist.


**Claims**

1. Method for predicting the speed of the wind in the plane of the rotor of a wind turbine (1) equipped with a LIDAR sensor (2), in which the following steps are implemented:

a) the speed of the wind in at least one measurement plane (PM), which is distant from said turbine (1), is measured by means of said LIDAR sensor (2);
b) an induction factor of the wind is determined, said induction factor of the wind representing a braking coefficient of the wind between said measurement plane and said plane of said rotor;
c) a delay index between said measurement plane (PM) and said plane of the rotor (PR) of said wind turbine (1) is determined by means of said induction factor and of said measurement of the speed of the wind in said measurement plane;
d) a model of the evolution of the wind between said measurement plane (PM) and said plane of said rotor (PR), said model of the evolution of the wind linking the speed of the wind in said plane of said rotor (PR) at a predetermined instant to the measured speed of the wind in said measurement plane (PM) at several instants which are prior to said predetermined instant, is constructed by means of said induction factor, said prior instants being determined by means of said delay index;
e) said prediction of the speed of the wind in said plane of the rotor is determined by means of said model of the evolution of the wind and of a Kalman filter, preferably an adaptive Kalman filter.

2. Prediction method according to Claim 1, in which an induction factor of the wind is determined by implementing the following steps:

i) the speed of the wind in at least three measurement planes (PM), which are distant from said wind turbine, is measured by means of said LIDAR sensor (2) ;
ii) at least two induction factors of the wind between two of said measurement planes (PM) are determined by means of said measurements of the speed of the wind in said measurement planes and of a linear Kalman filter; and

iii) said induction factor of the wind between a measurement plane (PM) and said plane of the rotor (PR) of said wind turbine (1) is determined by means of said induction factors between two measurement planes (PM) which have been determined and by means of a linear Kalman filter.

3. Prediction method according to one of the preceding claims, in which said step of measuring the speed of the wind comprises a substep of reconstructing the wind field in said measurement plane (PM), this reconstructed wind field being used in the other steps of the method as a measurement of the speed of the wind in said measurement plane.

4. Prediction method according to one of the preceding claims, in which the delay index $k_{d0}$ is determined by an equation: $k_{d0} = \dfrac{2x_1}{(U_{x_1}+U_0)T_s}$ , with $U_0 = a_{0,x1} U_{x1}$, with $x_1$ being the distance between said measurement plane (PM) and said rotor plane (PR), $T_s$ the sampling period for the measurement, $U_{x1}$ the average speed of the wind measured in said measurement plane (PM), $U_0$ the average speed of the wind in said rotor plane (PR) , and $a_{0,x1}$ said induction factor between said measurement plane (PM) and said rotor plane (PR) .

5. Prediction method according to one of the preceding claims, in which said model of the evolution of the wind is written: $u_0(k + p) = \tilde{U}_{x_1}(k - k_{d0} + p)^T r(k|k)$, with $\tilde{U}_{x_1}(k - k_{d0} + p) = [\tilde{u}_{x_1}(k - k_{d0} + p)\ \tilde{u}_{x_1}(k - k_{d0} + p - 1)\ \tilde{u}_{x_1}(k - k_{d0} + p + 1) \ldots \tilde{u}_{x_1}(k - k_{d0} + p + N_d)]^T$ and $\tilde{u}_{x_1}(k) = a_{0,x_1} u_{x_1}(k)$, with $u_0$ being the wind in the plane of the rotor (PR), k the discretized time, p the future time step, $k_{d0}$ the delay index, r the state vector determined by the Kalman filter, $x_1$ the measurement plane, $N_d$ the order of said model of the evolution of the wind, $u_{x_1}$ the speed of the wind measured in said measurement plane (PM), and $a_0,x_1$ said induction factor between said measurement plane (PM) and said rotor plane (PR) .

6. Prediction method according to Claim 5, in which the order of the model of the evolution of the wind $N_d$ equals 2.

7. Method for controlling a wind turbine (1) equipped with a LIDAR sensor (2), **characterized in that** the following steps are implemented:

   a) said prediction of the speed of the wind in the plane of the rotor (PR) of said wind turbine (1) is determined by means of the method according to one of the preceding claims;
   b) said wind turbine (1) is controlled in accordance with said speed of the wind in the plane of the rotor (PR).

8. Computer program product, **characterized in that** it comprises code instructions arranged to implement the steps of a method according to one of the preceding claims, when the program is executed on a processing unit of said LIDAR sensor (2).

9. LIDAR sensor (2) which is suitable for measuring the speed of the wind in at least one measurement plane (PM), which is distant from a wind turbine, **characterized in that** it comprises a processing unit which implements steps b) to e) of a method according to one of Claims 1 to 7.

10. Wind turbine (1), **characterized in that** it comprises a LIDAR sensor (2) according to Claim 9, said LIDAR sensor (2) preferably being placed on the nacelle of said wind turbine (1) or in the tip of the wind turbine.

[Fig 1]

[Fig 2]

[Fig 3]

[Fig 4]

[Fig 5]

[Fig 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- EP 3273055 A1
- US 2014167415 A1
- FR 3068139
- WO 2018234409 A
- FR 1871455
- FR 2976630 A1
- US 20120321463 A

**Littérature non-brevet citée dans la description**

- Investigation of the impact of the upstream induction zone on lidar measurement accuracy for wind turbine control applications using large-eddy simulation. **ERIC SIMLEY ; LUCY Y PAO ; PIETER GEBRAAD ; MATTHEW CHURCHFIELD.** Journal of Physics: Conférence Séries. IOP Publishing, 2014, vol. 524, 012003
- **ERIC SIMLEY ; LUCY PAO ; NEIL KELLEY ; BON-NIE JONKMAN ; ROD FREHLICH.** Lidar wind speed measurements of evolving wind fields. *50th AIAA Aerospace Sciences Meeting including the New Horizons Forum and Aerospace Exposition,* 2012, 656
- Estimation of rotor effective wind speeds using autoregressive models on Lidar data. **ASHIM GIYANANI ; WAAM BIERBOOMS ; GJW VAN BUSSEL.** Journal of Physics: Conférence Séries. IOP Publishing, 2016, vol. 753, 072018